# DEMANDE DE BREVET EUROPEEN

(11) **EP 4 649 865 A1**
(43) Date de publication de la demande: **19.11.2025**
(21) Numéro de dépôt: 25174566.7
(22) Date de dépôt: 06.05.2025
(51) Int. Cl.: A47J 31/36, A47J 31/44

(54) **APPAREIL DE PRÉPARATION DE BOISSONS ÉQUIPÉ D'UN SUPPORT DE RÉCIPIENT AMOVIBLE ET D'UN BAC DE COLLECTE DE MOUTURE AMOVIBLE**

(30) Priorité: 13.05.2024 FR 2404873
(71) Demandeur: SEB S.A., 69130 Ecully (FR)
(72) Inventeur: BEAUDET, Olivier, 69134 ECULLY CEDEX (FR); GUERIN, Christophe, 69134 ECULLY CEDEX (FR)
(74) Mandataire: SEB Développement

(57) **Abrégé**

L'appareil de préparation de boissons comprend un boîtier (3) comprenant des premier et deuxième compartiments de réception (11, 14) ; une tête de distribution de boisson ; un support de récipient (6) comportant une partie de support (8) configurée pour supporter un récipient et un réservoir de collecte (9) configuré pour collecter de l'eau de rinçage s'écoulant par gravité depuis la tête de distribution de boisson ; et un bac de collecte de mouture (13) configuré pour collecter des galettes de mouture usagées. Le support de récipient (6) et le bac de collecte de mouture (13) sont configurés de telle sorte qu'un retrait du support de récipient (6) hors du premier compartiment de réception (11) entraîne un retrait du bac de collecte de mouture (13) hors du deuxième compartiment de réception (14). Le bac de collecte de mouture (13) est amovible, par rapport au boîtier (3), indépendamment du support de récipient (6).

## Description

### Domaine technique

La présente invention concerne de manière générale un appareil de préparation de boissons, et plus particulièrement une machine à café automatique.

### Etat de la technique

De façon connue, un appareil de préparation de boissons, et plus particulièrement une machine à café automatique, peut comprendre :
- un boîtier comportant un premier compartiment de réception et un deuxième compartiment de réception,
- une chambre d'infusion disposée dans le boîtier et configurée pour contenir de la mouture, telle que de la mouture de café ou tout autre produit pulvérulent à infuser,
- une tête de distribution de boisson configurée pour être reliée fluidiquement à la chambre d'infusion et par laquelle une boisson confectionnée par l'appareil de préparation de boissons est apte à s'écouler hors de l'appareil de préparation de boissons,
- un support de récipient qui est partiellement logé dans le premier compartiment de réception et qui est amovible par rapport au boîtier, le support de récipient comportant :
   - une partie de support, telle qu'une grille de support, configurée pour supporter un récipient, tel qu'une tasse, et pour être située au moins en partie en-dessous de la tête de distribution de boisson, de telle sorte qu'une boisson confectionnée par l'appareil de préparation de boissons est apte à s'écouler par gravité dans un récipient supporté par la partie de support,
   - un réservoir de collecte configuré pour être situé au moins en partie en-dessous de la tête de distribution de boisson et pour collecter de l'eau de rinçage et des gouttes de boisson s'écoulant par gravité depuis la tête de distribution de boisson, et
- un bac de collecte de mouture qui est logé au moins en partie dans le deuxième compartiment de réception et qui est amovible par rapport au boîtier, le bac de collecte de mouture étant configuré pour collecter des galettes de mouture usagées provenant de la chambre d'infusion.

Le support de récipient et le bac de collecte de mouture sont plus particulièrement reliés mécaniquement l'un à l'autre de telle sorte qu'un retrait du support de récipient hors du premier compartiment de réception entraîne un retrait simultané du bac de collecte de mouture hors du deuxième compartiment de réception.

Cependant, un tel appareil de préparation de boissons nécessite une vidange et un nettoyage régulier du bac de collecte de mouture car l'appareil est configuré pour empêcher la réalisation d'une boisson lorsque la mouture dans le bac de collecte de mouture dépasse un niveau prédéterminé. Or, avec un tel appareil, une telle opération de vidange reste complexe et nécessite notamment de devoir retirer le support de récipient hors du premier compartiment de réception et de désassembler le bac de collecte de mouture du support de récipient (au risque de renverser une partie du contenu du réservoir de collecte et de salir le plan de travail ou le sol), avant de pouvoir enfin vider le bac de collecte de mouture de son contenu et éventuellement le nettoyer.

### Résumé de l'invention

La présente invention vise à remédier aux inconvénients précités.

Le problème technique à la base de l'invention consiste notamment à fournir un appareil de préparation de boissons, tel qu'une machine à café automatique, qui soit de structure simple et ergonomique, tout en permettant un nettoyage facilité du support de récipient et du bac de collecte de mouture, ainsi qu'une vidange aisée du bac de collecte de mouture.

A cet effet, la présente invention concerne un appareil de préparation de boissons, tel qu'une machine à café automatique, comprenant :
- un boîtier comportant un premier compartiment de réception et un deuxième compartiment de réception,
- une chambre d'infusion disposée dans le boîtier et configurée pour contenir de la mouture, telle que de la mouture de café ou tout autre produit pulvérulent à infuser,
- une tête de distribution de boisson configurée pour être reliée fluidiquement à la chambre d'infusion et par laquelle une boisson confectionnée par l'appareil de préparation de boissons est apte à s'écouler hors de l'appareil de préparation de boissons,
- un support de récipient qui est partiellement logé dans le premier compartiment de réception et qui est amovible par rapport au boîtier, le support de récipient comportant :
   - une partie de support configurée pour supporter un récipient, tel qu'une tasse, et pour être située au moins en partie en-dessous de la tête de distribution de boisson, de telle sorte qu'une boisson confectionnée par l'appareil de préparation de boissons est apte à s'écouler par gravité dans un récipient supporté par la partie de support,
   - un réservoir de collecte configuré pour être situé au moins en partie en-dessous de la partie de support et pour collecter de l'eau de rinçage et/ou des gouttes de boisson s'écoulant par gravité depuis la tête de distribution de boisson, et
- un bac de collecte de mouture qui est logé au moins en partie dans le deuxième compartiment de réception et qui est amovible par rapport au boîtier, le bac de collecte de mouture étant configuré pour collecter des galettes de mouture usagées provenant de la chambre d'infusion,
le support de récipient et le bac de collecte de mouture étant configurés, et étant par exemple reliés mécaniquement l'un à l'autre, de telle sorte qu'un retrait du support de récipient hors du premier compartiment de réception entraîne un retrait, et plus particulièrement un retrait simultané, du bac de collecte de mouture hors du deuxième compartiment de réception.

Conformément à l'invention, le bac de collecte de mouture est amovible, par rapport au boîtier, indépendamment du support de récipient, de telle sorte que le bac de collecte de mouture est apte à être retiré hors du deuxième compartiment de réception sans retirer le support de récipient hors du premier compartiment de réception. En d'autres termes, le support de récipient et le bac de collecte de mouture sont configurés de telle sorte qu'un retrait du bac de collecte de mouture hors du deuxième compartiment de réception n'entraîne pas un retrait du support de récipient hors du premier compartiment de réception.

Une telle configuration de l'appareil de préparation de boissons selon la présente invention permet un retrait aisé du bac de collecte de mouture hors du boîtier sans requérir un retrait du support de récipient, ce qui facilite la manipulation ultérieure du bac de collecte de mouture en vue de sa vidange voire de son nettoyage et ce qui évite en outre de renverser une partie du contenu du réservoir de collecte.

En outre, le fait qu'un retrait du support de récipient hors du premier compartiment de réception entraîne un retrait du bac de collecte de mouture hors du deuxième compartiment de réception permet de s'assurer que lorsque l'utilisateur vidange et nettoie le support de récipient, il nettoie également le bac de collecte de mouture et ainsi d'inciter l'utilisateur à réaliser un nettoyage complet.

La fréquence de vidange du bac de collecte de mouture étant généralement plus élevée que la fréquence de vidange du support de récipient et notamment du réservoir de collecte, la configuration de l'appareil selon l'invention est particulièrement avantageuse.

L'appareil de préparation de boissons peut en outre présenter une ou plusieurs des caractéristiques suivantes, prises seules ou en combinaison.

Selon un mode de réalisation de l'invention, les premier et deuxième compartiments de réception débouchent dans une face avant du boîtier.

Selon un mode de réalisation de l'invention, le support de récipient comporte un logement de réception dans lequel est monté de manière amovible le bac de collecte de mouture, et par exemple une partie inférieure du bac de collecte de mouture.

Selon un mode de réalisation de l'invention, le logement de réception présente une forme sensiblement complémentaire à celle d'une partie inférieure du bac de collecte de mouture.

Selon un mode de réalisation de l'invention, le logement de réception comporte une paroi de logement arrière configurée pour coopérer avec une partie arrière du bac de collecte de mouture lorsque le support de récipient est retiré hors du premier compartiment de réception.

Selon un mode de réalisation de l'invention, le logement de réception est ouvert vers le haut.

Selon un mode de réalisation de l'invention, le logement de réception est en outre ouvert vers l'avant.

Selon un mode de réalisation de l'invention, le logement de réception est configuré pour déboucher dans le deuxième compartiment de réception lorsque le support de récipient est logé au moins en partie dans le premier compartiment de réception.

Selon un mode de réalisation de l'invention, le bac de collecte de mouture est configuré pour être retiré hors du logement de réception et du deuxième compartiment de réception selon un mouvement de retrait de bac, et par exemple selon un mouvement de translation, qui est dirigé vers l'avant de l'appareil de préparation de boissons. Une telle orientation du mouvement de retrait de bac facilite encore le retrait du bac de collecte de mouture, en vue notamment de sa vidange et de son nettoyage.

Selon un mode de réalisation de l'invention, l'appareil de préparation de boissons est configuré de telle sorte que le mouvement de retrait de bac est sensiblement horizontal lorsque le boîtier repose sur une surface horizontale.

Selon un mode de réalisation de l'invention, le support de récipient comprend un système de flotteur propre à traverser une ouverture ménagée à travers la partie de support.

Selon un mode de réalisation de l'invention, le réservoir de collecte comprend un corps principal comprenant une première partie destinée à être positionnée en-dessous de la partie de support et une deuxième partie destinée à être positionnée dans le premier compartiment de réception.

Selon un mode de réalisation de l'invention, le support de récipient comprend une pièce intermédiaire destinée à être superposée au réservoir de collecte et définissant le logement de réception.

Selon un mode de réalisation de l'invention, la pièce intermédiaire est propre à être reçue sur un épaulement formé sur un bord périphérique du réservoir de collecte et/ou sur des plots en saillie d'un fond du réservoir de collecte.

Selon un mode de réalisation de l'invention, la pièce intermédiaire comprend un orifice de passage de liquide configuré pour autoriser un passage de liquide vers le réservoir de collecte, et avantageusement un orifice de passage configuré pour autoriser un passage d'un flotteur appartenant au système de flotteur.

Selon un mode de réalisation de l'invention, la partie de support comprend une grille de support de récipient comprenant des orifices de passage de liquide destinés à être positionnés en regard de la tête de distribution de boisson, et un capot de réception configuré pour supporter la grille de support de récipient et propre à être fixé à la pièce intermédiaire et/ou au réservoir de collecte, le capot de réception définissant un logement de réception central dans lequel est reçue la grille de support de récipient.

Selon un mode de réalisation de l'invention, le capot de réception comprend un orifice de passage du flotteur.

Selon un mode de réalisation de l'invention, le support de récipient comporte deux parois de guidage latérales délimitant latéralement le logement de réception, le bac de collecte de mouture comportant une partie inférieure pourvue de deux parois latérales inférieures situées à l'opposé l'une de l'autre et configurées pour coopérer avec, et plus particulièrement pour être guidées par, les deux parois de guidage latérales prévues sur le support de récipient lorsque le bac de collecte de mouture est inséré dans ou retiré hors du logement de réception. Une telle configuration du support de récipient et du bac de collecte de mouture assure un guidage optimal du bac de collecte de mouture notamment lors de son retrait hors du deuxième compartiment de réception.

Selon un mode de réalisation de l'invention, les deux parois de guidage latérales prévues sur le support de récipient sont sensiblement parallèles entre elles.

Selon un mode de réalisation de l'invention, les deux parois latérales inférieures prévues sur la partie inférieure du bac de collecte de mouture sont sensiblement parallèles.

Selon un mode de réalisation de l'invention, l'appareil de préparation de boissons comporte un dispositif de maintien en position configuré pour maintenir en position le bac de collecte de mouture dans le logement de réception, le dispositif de maintien en position comportant au moins un organe de retenue, tel qu'une nervure de retenue, prévu sur le support de récipient et configuré pour coopérer avec le bac de collecte de mouture. Une telle configuration de l'appareil de préparation de boissons évite tout risque de renversement ou de chute du bac de collecte de mouture lors de la manipulation du support de récipient par un utilisateur.

Selon un mode de réalisation de l'invention, le dispositif de maintien en position comporte en outre au moins un élément de retenue, tel qu'une rainure de retenue, prévu sur le bac de collecte de mouture et configuré pour coopérer avec l'au moins un organe de retenue.

Selon un mode de réalisation de l'invention, l'au moins un organe de retenue et l'au moins un élément de retenue sont configurés pour s'étendre sensiblement parallèlement au mouvement de retrait de bac. Une telle orientation de l'au moins un organe de retenue et l'au moins un élément de retenue assure un guidage encore accru du bac de collecte de mouture lors de son insertion dans ou son retrait hors du logement de réception.

Selon un mode de réalisation de l'invention, l'au moins un organe de retenue est situé dans le logement de réception. De façon avantageuse, l'au moins un organe de retenue est prévu sur une face interne de l'une des deux parois de guidage latérales.

Selon un mode de réalisation de l'invention, l'au moins un élément de retenue est situé sur la partie inférieure du bac de collecte de mouture. De façon avantageuse, l'au moins un organe de retenue est prévu sur une face externe de l'une des deux parois latérales inférieures.

Selon un mode de réalisation de l'invention, le dispositif de maintien en position comporte deux organes de retenue prévus respectivement sur les faces internes des deux parois de guidage latérales, et deux éléments de retenue prévus respectivement sur les faces externes des deux parois latérales inférieures. De façon avantageuse, les deux organes de retenue sont situés en regard l'un de l'autre.

Selon un mode de réalisation de l'invention, le support de récipient est configuré pour être retiré hors du premier compartiment de réception selon un mouvement de retrait de support, et plus particulièrement un mouvement de translation, qui est dirigé vers l'avant de l'appareil de préparation de boissons.

Selon un mode de réalisation de l'invention, le mouvement de retrait de support est sensiblement parallèle au mouvement de retrait de bac.

Selon un mode de réalisation de l'invention, le bac de collecte de mouture est configuré pour reposer directement sur le support de récipient.

Selon un mode de réalisation de l'invention, le bac de collecte de mouture comporte une paroi inférieure configurée pour reposer directement sur le support de récipient, et plus particulièrement sur une paroi de fond du logement de réception.

Selon un mode de réalisation de l'invention, la paroi inférieure du bac de collecte de mouture est configurée pour glisser contre la paroi de fond du logement de réception lorsque le bac de collecte de mouture est inséré dans ou retiré hors du logement de réception.

Selon un mode de réalisation de l'invention, le boîtier comporte un compartiment de réception principal comportant une première partie de réception formant le premier compartiment de réception, et une deuxième partie de réception communiquant avec la première partie de réception et formant le deuxième compartiment de réception.

Selon un mode de réalisation de l'invention, le compartiment de réception principal a une forme générale de L inversé.

Selon un mode de réalisation de l'invention, l'appareil de préparation de boissons comporte un dispositif de détection de présence, tel qu'un commutateur électrique, configuré pour détecter la présence du bac de collecte de mouture dans le deuxième compartiment de réception. La présence d'un tel dispositif de détection de présence permet notamment d'avertir un utilisateur de l'absence du bac de collecte de mouture, et par exemple également d'empêcher la réalisation d'un cycle de préparation de boisson lorsque le bac de collecte de mouture est absent.

Selon un mode de réalisation de l'invention, l'appareil de préparation de boissons comporte une unité électronique de commande configurée pour commander le fonctionnement de l'appareil de préparation de boissons, l'unité électronique de commande étant configurée pour empêcher la réalisation d'un cycle de préparation de boisson lorsque la présence du bac de collecte de mouture dans le deuxième compartiment de réception n'est pas détectée par le dispositif de détection de présence, c'est-à-dire lorsque le bac de collecte de mouture est absent. En d'autres termes, l'unité électronique de commande est configurée pour autoriser la réalisation d'un cycle de préparation de boisson uniquement lorsque la présence du bac de collecte de mouture dans le deuxième compartiment de réception est détectée par le dispositif de détection de présence.

Selon un mode de réalisation de l'invention, le dispositif de détection de présence est fixe par rapport au boîtier et est configuré pour occuper un premier état, et par exemple pour être activé ou désactivé, lorsque le bac de collecte de mouture est disposé dans le deuxième compartiment de réception, et pour occuper un deuxième état, et par exemple pour être désactivé ou activé, lorsque le bac de collecte de mouture est situé hors du deuxième compartiment de réception, c'est-à-dire est absent.

Selon un mode de réalisation de l'invention, le bac de collecte de mouture comporte une partie d'actionnement, telle qu'une patte d'actionnement, configurée pour coopérer avec le dispositif de détection de présence lorsque le bac de collecte de mouture est inséré dans ou retiré hors du deuxième compartiment de réception.

Selon un mode de réalisation de l'invention, la partie d'actionnement est configurée pour entraîner un passage du dispositif de détection de présence du deuxième état au premier état, par exemple pour activer ou désactiver le commutateur électrique, lorsque le bac de collecte de mouture est inséré dans le deuxième compartiment de réception, et pour entraîner un passage du dispositif de détection de présence du premier état au deuxième état, par exemple pour désactiver ou activer le commutateur électrique, lorsque le bac de collecte de mouture est retiré hors du deuxième compartiment de réception.

Selon un mode de réalisation de l'invention, la partie d'actionnement est située dans une partie supérieure du bac de collecte de mouture, et par exemple dans une partie supérieure arrière du bac de collecte de mouture.

Selon un mode de réalisation de l'invention, la partie d'actionnement fait saillie d'une face arrière du bac de collecte de mouture.

Selon un mode de réalisation de l'invention, le deuxième compartiment de réception comporte une fenêtre de passage, par exemple de forme rectangulaire et par exemple s'étendant sensiblement verticalement, au travers de laquelle s'étend la partie d'actionnement lorsque le bac de collecte de mouture est situé dans le deuxième compartiment de réception.

Selon un mode de réalisation de l'invention, la fenêtre de passage est prévue sur une paroi arrière du deuxième compartiment de réception. De façon avantageuse, la paroi arrière du deuxième compartiment de réception est configurée pour s'étendre sensiblement verticalement lorsque que le boîtier repose sur une surface horizontale.

Selon un mode de réalisation de l'invention, la fenêtre de passage, le deuxième compartiment de réception et la partie inférieure du bac de collecte de mouture sont configurés de telle sorte que, lorsque le bac de collecte de mouture est inséré dans le deuxième compartiment de réception en l'absence du support de récipient, la partie d'actionnement est inapte à coopérer avec le dispositif de détection de présence, et en particulier à maintenir le dispositif de détection de présence dans le premier état. De façon avantageuse, l'appareil de préparation de boissons est configuré de telle sorte que, lorsque le bac de collecte de mouture est inséré dans le deuxième compartiment de réception en l'absence du support de récipient, le bac de collecte de mouture occupe une position anormale de fonctionnement qui est abaissée verticalement par rapport à sa position normale de fonctionnement en présence du support de récipient. Or, lorsque le bac de collecte de mouture occupe la position anormale de fonctionnement, la partie d'actionnement est décalée verticalement par rapport au dispositif de détection de présence, et n'est donc pas apte à coopérer avec ce dernier.

Selon un mode de réalisation de l'invention, la tête de distribution de boisson est déplaçable verticalement par rapport au support de récipient et au boîtier entre une position basse dans laquelle un récipient de petite taille, tel qu'une tasse destinée à contenir un ristretto, peut être disposé sur le support de récipient et être alimenté en boisson, par exemple en café, à partir de la tête de distribution de boisson, et une position haute dans laquelle un récipient de grande taille, tel qu'un mug, peut être disposé sur le support de récipient et être alimenté en boisson, par exemple en eau chaude, à partir de la tête de distribution de boisson.

Selon un mode de réalisation de l'invention, la partie de support recouvre le réservoir de collecte. De façon avantageuse, la partie de support est amovible par rapport au réservoir de collecte.

Selon un mode de réalisation de l'invention, l'appareil de préparation de boissons comporte un distributeur de mouture automatique configuré pour alimenter automatiquement, et par exemple par gravité, la chambre d'infusion avec une dose de mouture prédéterminée.

Selon un mode de réalisation de l'invention, l'appareil de préparation de boissons comporte un distributeur de mouture manuel configuré pour permettre à un utilisateur d'introduire manuellement de la mouture dans la chambre d'infusion.

Selon un mode de réalisation de l'invention, le distributeur de mouture automatique comprend un réservoir de grains de café, et un broyeur configuré pour broyer des grains de café provenant du réservoir de grains de café. De façon avantageuse, le broyeur comporte un orifice de distribution de mouture, et le distributeur de mouture automatique comporte une goulotte d'acheminement communiquant avec l'orifice de distribution de mouture et configurée pour acheminer de la mouture provenant de l'orifice de distribution de mouture vers la chambre d'infusion.

Selon un mode de réalisation de l'invention, la chambre d'infusion présente un axe longitudinal central configuré pour s'étendre sensiblement verticalement lorsque le boîtier de l'appareil de préparation de boissons repose sur une surface horizontale.

### Brève description des figures

La présente invention sera bien comprise à l'aide de la description qui suit en référence aux figures annexées, dans lesquelles des signes de références identiques correspondent à des éléments structurellement et/ou fonctionnellement identiques ou similaires.
Figure 1 est une vue en perspective de dessus d'un appareil de préparation de boissons selon la présente invention ;
Figure 2 est une vue partielle en perspective de dessus de l'appareil de préparation de boissons de la figure 1 ;
Figure 3 est une vue partielle en coupe longitudinale de l'appareil de préparation de boissons de la figure 1 ;
Figure 4 est une vue en perspective de dessus d'un support de récipient et d'un bac de collecte de mouture appartenant à l'appareil de préparation de boissons de la figure 1 ;
Figure 5 est une vue partielle en perspective du bac de collecte de mouture de la figure 4 et d'un dispositif de détection de présence appartenant à l'appareil de préparation de boissons de la figure 1 ;
Figure 6 est une vue en perspective de dessus du support de récipient de la figure 4 ;
Figure 7 est une vue en perspective de dessus du support de récipient de la figure 4 ;
Figure 8 est une vue partielle en perspective de dessus du support de récipient de la figure 4 ;
Figure 9 est une vue arrière en perspective du bac de collecte de mouture de la figure 4 ;
Figure 10 est une vue partielle en coupe longitudinale de l'appareil de préparation de boissons de la figure 1 ;
Figure 11 est une vue partielle en perspective de l'appareil de préparation de boissons de la figure 1 ;
Figure 12 est une vue partielle en perspective de l'appareil de préparation de boissons de la figure 1, dans laquelle le support de récipient et le bac de collecte de mouture ont été retirés ;
Figure 13 est une vue partielle en perspective de l'appareil de préparation de boissons de la figure 1, dans laquelle le support de récipient et le bac de collecte de mouture ont été retirés ;
Figure 14 est une vue éclatée du support de récipient de la figure 8.

### Description détaillée

On notera que dans ce document, les termes « horizontal », « supérieur », « au-dessus », « sous », « avant » et « arrière » employés pour décrire l'appareil de préparation de boissons font références à l'appareil de préparation de boissons en situation d'usage lorsqu'il repose sur une surface qui est plane et horizontale, telle qu'un plan de travail, et est situé face à un utilisateur.

A défaut de stipulation contraire, le terme « sensiblement » signifie, dans le présent document, « exactement ou à 10% ou à 10° près ».

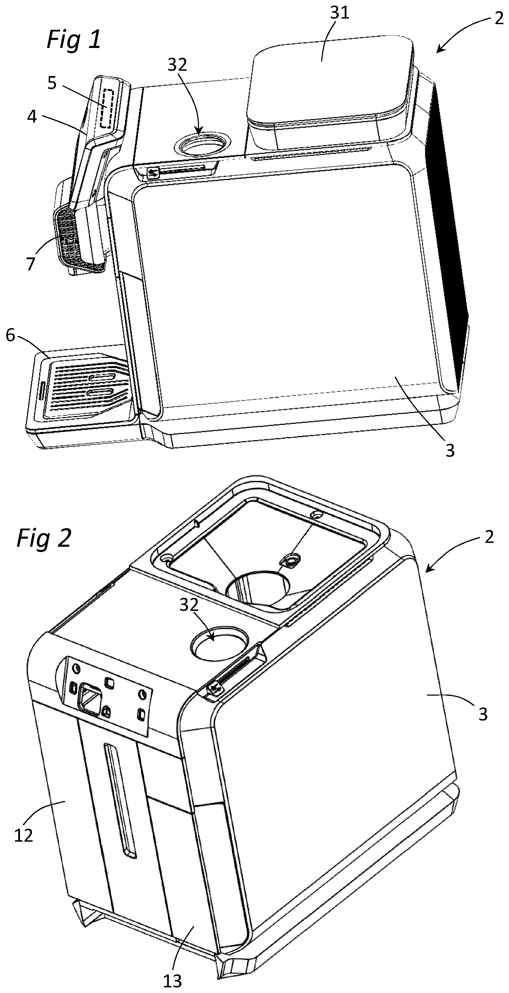

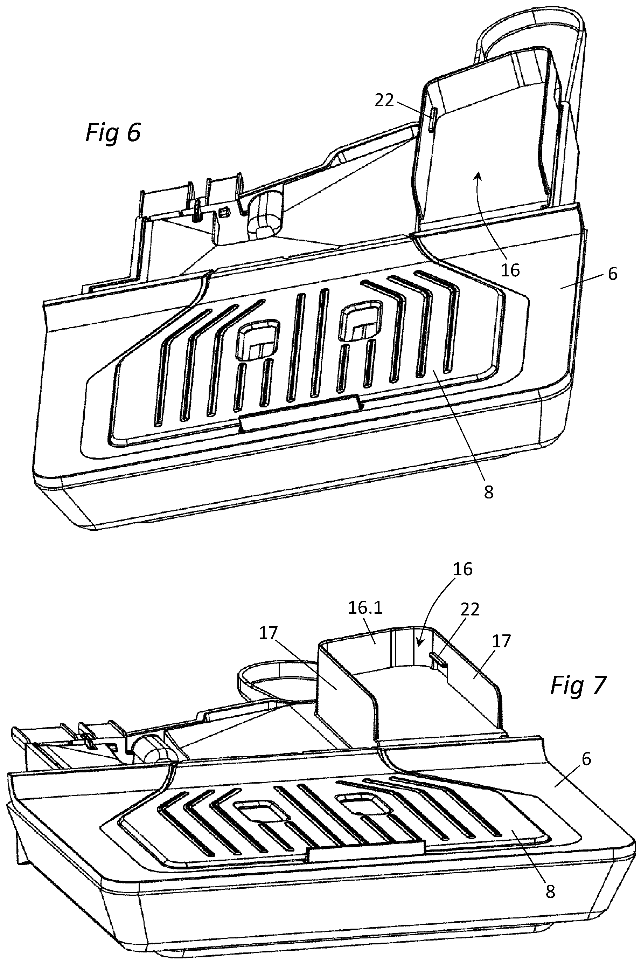

Les figures 1 à 14 représentent un appareil de préparation de boissons 2, tel qu'une machine à café automatique, adaptée pour préparer notamment du café, des boissons lactées ou encore du thé.

L'appareil de préparation de boissons 2 comprend un boîtier 3, par exemple de forme générale parallélépipédique, configuré pour reposer sur une surface de travail, telle qu'un plan de travail. Le boîtier 3 renferme les principaux éléments fonctionnels de l'appareil de préparation de boissons 2.

Le boîtier 3 comporte une façade qui est avantageusement équipée d'une interface utilisateur 4, par exemple pourvue d'un écran d'affichage, permettant à un utilisateur de sélectionner différents cycles de fonctionnement de l'appareil de préparation de boissons 2. L'appareil de préparation de boissons 2 comporte également une unité électronique de commande 5 reliée fonctionnellement à l'interface utilisateur 4 et configurée pour commander le fonctionnement de l'appareil de préparation de boissons 2 notamment en fonction des cycles de fonctionnement sélectionnés par un utilisateur.

L'appareil de préparation de boissons 2 comprend en outre un support de récipient 6 sur lequel un récipient, tel qu'une tasse, peut être disposé, et une tête de distribution de boisson 7 par laquelle une boisson confectionnée par l'appareil de préparation de boissons 2 est apte à s'écouler par gravité dans un récipient positionné sur le support de récipient 6.

Selon un mode de réalisation de l'invention, la tête de distribution de boisson 7 est déplaçable verticalement par rapport au support de récipient 6 et au boîtier 3 entre une position basse dans laquelle un récipient de petite taille, tel qu'une tasse destinée à contenir un ristretto, peut être disposé sur le support de récipient 6 et être alimenté en boisson, par exemple en café, à partir de la tête de distribution de boisson 7, et une position haute dans laquelle un récipient de grande taille, tel qu'un mug, peut être disposé sur le support de récipient 6 et être alimenté en boisson, par exemple en eau chaude, à partir de la tête de distribution de boisson 7.

Le support de récipient 6 comporte plus particulièrement une partie de support 8, et un réservoir de collecte 9 situé au moins en partie en-dessous de la partie de support 8 et configuré pour collecter, en l'absence de récipient sur la partie de support 8, de l'eau de rinçage et/ou des gouttes de boisson s'écoulant par gravité depuis la tête de distribution de boisson 7. De façon avantageuse, la partie de support 8 est amovible par rapport au réservoir de collecte 9.

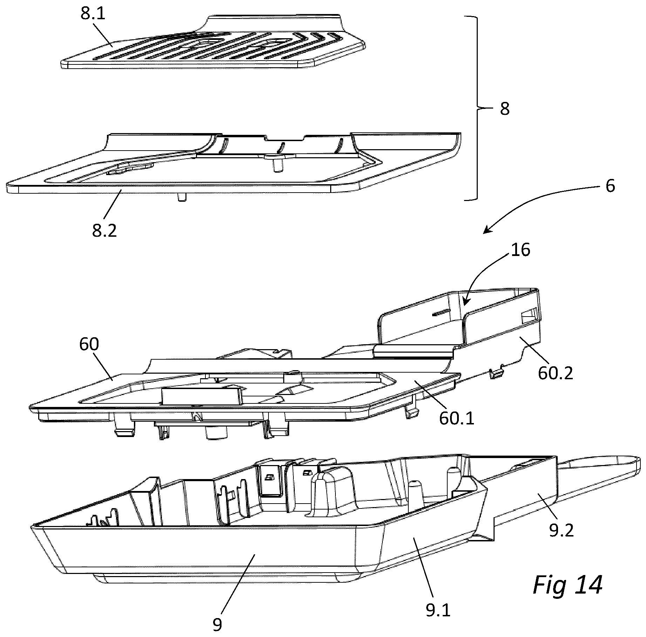

Comme montré plus particulièrement sur la figure 14, la partie de support 8 comprend une grille de support de récipient 8.1 comprenant des orifices de passage de liquide destinés à être positionnés en regard de la tête de distribution de boisson 7. La grille de support de récipient 8.1 est située au moins en partie en-dessous de la tête de distribution de boisson 7 et est configurée pour supporter un récipient.

La partie de support 8 comprend également un capot de réception 8.2 configuré pour supporter la grille de support de récipient 8.1 et propre à être fixé, directement ou indirectement, au réservoir de collecte 9. Le capot de réception 8.2 définit plus particulièrement un logement de réception central apte à recevoir la grille de support de récipient 8.1. Avantageusement, la grille de support de récipient 8.1 est superposée au capot de réception 8.2 au niveau du logement de réception central.

Le support de récipient 6 est amovible par rapport au boîtier 3, et est partiellement logé dans un premier compartiment de réception 11 délimité par le boîtier 3. De façon avantageuse, le premier compartiment de réception 11 débouche dans une face avant du boîtier 3, et le support de récipient 6 est configuré pour être retiré hors du premier compartiment de réception 11 selon un mouvement de retrait de support, et plus particulièrement selon un mouvement de translation, qui est dirigé vers l'avant de l'appareil de préparation de boissons 2 et qui est sensiblement horizontal lorsque le boîtier 3 repose sur une surface horizontale.

Selon le mode de réalisation représenté sur les figures, le réservoir de collecte 9 comprend un corps principal comprenant une première partie 9.1 destinée à être positionnée en-dessous de la partie de support 8 et une deuxième partie 9.2 destinée à être positionnée dans le premier compartiment de réception 11.

L'appareil de préparation de boissons 2 comprend également un réservoir d'eau 12 par exemple situé dans une première partie latérale du boîtier 3, et un bac de collecte de mouture 13, par exemple situé dans une deuxième partie latérale du boîtier 3, configuré pour collecter des galettes de mouture usagées.

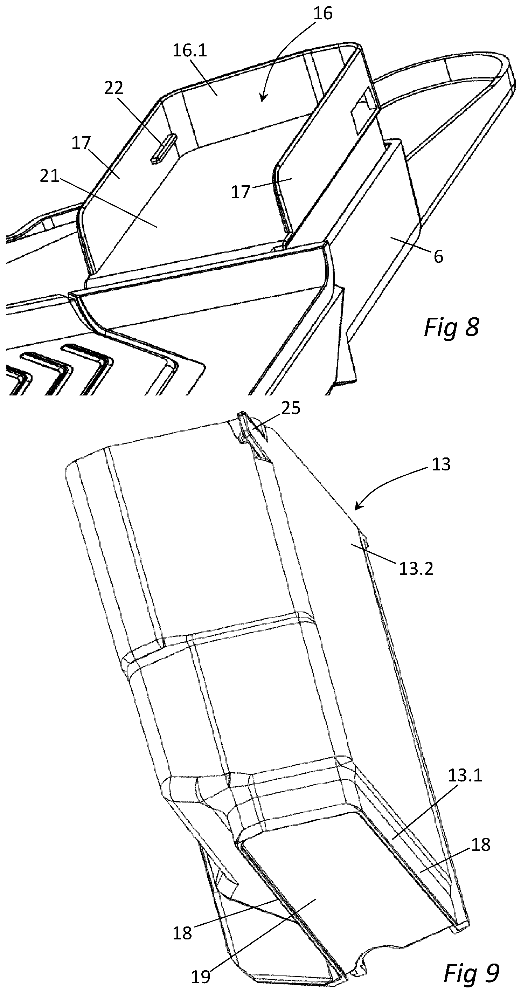

Comme montré sur la figure 9, le bac de collecte de mouture 13 comporte une partie inférieure 13.1, et une partie supérieure 13.2 pourvue d'une ouverture supérieure 13.3 à travers laquelle des galettes de mouture usagées sont aptes à être introduites dans le bac de collecte de mouture 13.

Le bac de collecte de mouture 13 est amovible par rapport au boîtier 3, et est logé au moins en partie dans un deuxième compartiment de réception 14 délimité par le boîtier 3. De façon avantageuse, le deuxième compartiment de réception 14 débouche dans la face avant du boîtier 3. Selon le mode de réalisation représenté sur les figures, le boîtier 3 comporte un compartiment de réception principal 15 comportant une première partie de réception formant le premier compartiment de réception 11, et une deuxième partie de réception communiquant avec la première partie de réception et formant le deuxième compartiment de réception 14. De façon avantageuse, le compartiment de réception principal 15 a une forme générale de L inversé.

Le support de récipient 6 et le bac de collecte de mouture 13 sont reliés mécaniquement l'un à l'autre de telle sorte qu'un retrait du support de récipient 6 hors du premier compartiment de réception 11 et selon le mouvement de retrait de support entraîne un retrait, et plus particulièrement un retrait simultané, du bac de collecte de mouture 13 hors du deuxième compartiment de réception 14.

A cet effet, le support de récipient 6 comporte un logement de réception 16 dans lequel est monté de manière amovible le bac de collecte de mouture 13, et plus particulièrement la partie inférieure 13.1 du bac de collecte de mouture 13. De façon avantageuse, le logement de réception 16 est ouvert vers le haut, présente une forme sensiblement complémentaire à celle de la partie inférieure 13.1 du bac de collecte de mouture 13, et est configuré pour déboucher dans le deuxième compartiment de réception 14 lorsque le support de récipient 6 est logé dans le premier compartiment de réception 11.

Le logement de réception 16 comporte notamment une paroi de logement arrière 16.1 configurée pour coopérer avec une partie arrière du bac de collecte de mouture 13 lorsque le bac de collecte de mouture 13 est logé dans le logement de réception 16 et que le support de récipient 6 est retiré hors du premier compartiment de réception 11 selon le mouvement de retrait de support, de manière à assurer un retrait simultané du bac de collecte de mouture 13 hors du deuxième compartiment de réception 14.

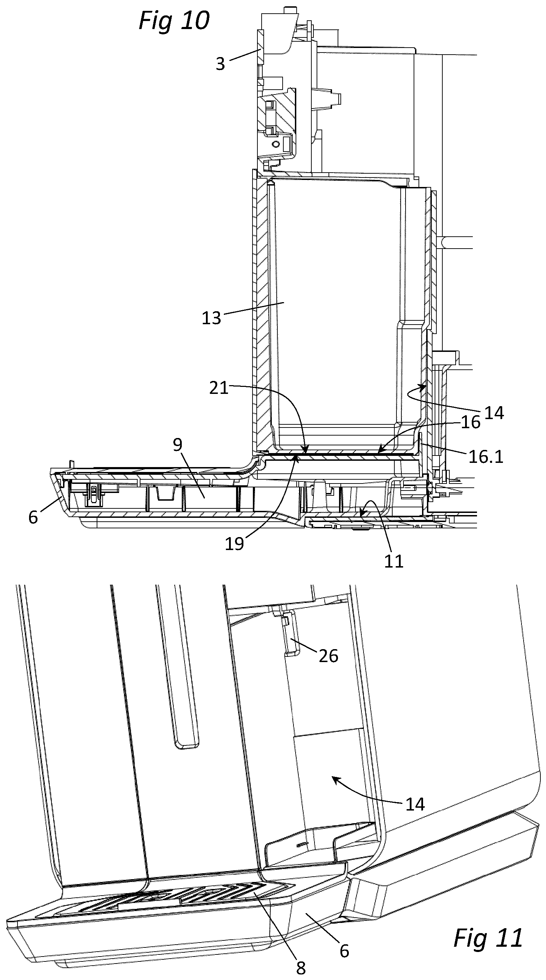

Comme montré notamment sur la figure 11, le bac de collecte de mouture 13 est amovible, par rapport au boîtier 3, indépendamment du support de récipient 6, de telle sorte que le bac de collecte de mouture 13 est apte à être retiré hors du deuxième compartiment de réception 14 sans entraîner un retrait du support de récipient 6 hors du premier compartiment de réception 11. Ces dispositions permettent ainsi de pouvoir vider le bac de collecte de mouture 13 et le nettoyer sans avoir à manipuler en outre le support de récipient 6.

A cet effet, le logement de réception 16 est en outre ouvert vers l'avant, et le bac de collecte de mouture 13 est configuré pour être retiré hors du logement de réception 16 et du deuxième compartiment de réception 14 selon un mouvement de retrait de bac, et par exemple selon un mouvement de translation, qui est dirigé vers l'avant de l'appareil de préparation de boissons 2 et qui est sensiblement parallèle au mouvement de retrait de support.

Selon le mode de réalisation représenté sur les figures, le support de récipient 6 comporte deux parois de guidage latérales 17 délimitant latéralement le logement de réception 16, et la partie inférieure 13.1 du bac de collecte de mouture 13 est pourvue de deux parois latérales inférieures 18 situées à l'opposé l'une de l'autre et configurées pour coopérer avec, et plus particulièrement pour être guidées par, les deux parois de guidage latérales 17 prévues sur le support de récipient 6 lorsque le bac de collecte de mouture 13 est inséré dans ou retiré hors du logement de réception 16. De façon avantageuse, les deux parois de guidage latérales 17 prévues sur le support de récipient 6 sont sensiblement parallèles entre elles, et les deux parois latérales inférieures 18 prévues sur la partie inférieure 13.1 du bac de collecte de mouture 13 sont sensiblement parallèles entre elles.

Selon le mode de réalisation représenté sur les figures, le bac de collecte de mouture 13 comporte une paroi inférieure 19 configurée pour reposer directement sur une paroi de fond 21 du logement de réception 16 et pour glisser sur ladite paroi de fond 21 lorsque le bac de collecte de mouture 13 est inséré dans ou retiré hors du logement de réception 16.

Comme montré notamment sur les figures 8 et 9, l'appareil de préparation de boissons 2 comporte un dispositif de maintien en position configuré pour maintenir en position le bac de collecte de mouture 13 dans le logement de réception 16, notamment lors de la manipulation du support de récipient 6 après son retrait hors du premier compartiment de réception 11.

Selon le mode de réalisation représenté sur les figures, le dispositif de maintien en position comporte deux organes de retenue 22, tels que des nervures de retenue, prévus respectivement sur les faces internes des deux parois de guidage latérales 17 et configurés pour coopérer avec le bac de collecte de mouture 13, et avantageusement avec les deux parois latérales inférieures 18.

Avantageusement, le dispositif de maintien en position comporte également deux éléments de retenue, tels que des rainures de retenue, prévus respectivement sur les faces externes des deux parois latérales inférieures 18 et configurés pour coopérer avec les organes de retenue 22 lorsque le bac de collecte de mouture 13 est inséré dans ou retiré hors du logement de réception 16. De façon avantageuse, les deux organes de retenue 22 et les deux éléments de retenue sont configurés pour s'étendre sensiblement horizontalement lorsque le boîtier 3 repose sur une surface horizontale, et facilitent ainsi l'insertion et le retrait du bac de collecte de mouture 13 dans et hors du logement de réception 16. De plus, une telle configuration du dispositif de maintien en position permet de maintenir sensiblement vertical le bac de collecte de mouture 13 lorsque ce dernier est inséré dans ou retiré hors du logement de réception 16.

Comme représenté plus particulièrement sur la figure 14, le support de récipient 6 comprend également une pièce intermédiaire 60 destinée à être superposée au réservoir de collecte 9 et définissant le logement de réception 16.

Avantageusement, la pièce intermédiaire 60 est propre à être reçue sur un épaulement formé sur un bord périphérique du réservoir de collecte 9 et/ou sur des plots en saillie d'un fond du réservoir de collecte 9 visibles sur la figure 14.

La pièce intermédiaire 60 comprend des organes de fixations propres à coopérer avec des organes de fixation complémentaires formés sur le réservoir de collecte 9. La pièce intermédiaire 60 est par exemple propre à être clipsée sur le réservoir de collecte 9.

Avantageusement, le support de récipient 6 comprend un système de flotteur propre à traverser une ouverture ménagée à travers la partie de support 8. Le système de flotteur comprend par exemple un flotteur fixé à la pièce intermédiaire 60 et mobile en translation verticale par rapport à la pièce intermédiaire 60. Le flotteur est par exemple configuré pour comprendre une portion inférieure destinée à être reçue dans le réservoir de collecte 9 et une portion supérieure destinée à traverser l'ouverture ménagée à travers la partie de support 8 lorsque le liquide contenu dans le réservoir de collecte 9 dépasse un seuil prédéterminé. La portion supérieure forme un indicateur visuel du niveau de liquide dans le réservoir de collecte 9. La portion supérieure est également agencée au travers d'une ouverture verticale ménagée dans la pièce intermédiaire 60. L'ouverture verticale forme un orifice de passage du flotteur.

De manière plus détaillée, la pièce intermédiaire 60 comprend une portion avant 60.1 destinée à être positionnée en regard de la tête de distribution de boisson 7 et une portion arrière 60.2 formant le logement de réception 16, la portion arrière 60.2 étant surélevée par rapport à la portion avant 60.1 et la portion arrière 60.2 étant destinée à être reçue dans le deuxième compartiment de réception 14. Avantageusement, la portion arrière 60.2 comprend un orifice de passage de liquide vers le réservoir de collecte 9.

Le capot de réception 8.2, apte à recevoir la grille de support de récipient 8.1, est avantageusement configuré pour être fixé à la pièce intermédiaire 60 via des plots de fixation verticaux. Avantageusement encore, le capot de réception 8.2 est configuré pour être superposé à la pièce intermédiaire 60, c'est-à-dire positionné au-dessus du réservoir de collecte 9 et de la pièce intermédiaire 60.

Le capot de réception 8.2 est propre à recouvrir la portion avant 60.1 de la pièce intermédiaire 60. De préférence, le capot de réception 8.2 comprend un bord périphérique propre à coopérer avec un bord périphérique du réservoir de collecte 9.

La grille de support de récipient 8.1 est propre à être reçue dans le logement de réception central, défini par le capot de réception 8.2, de sorte à être positionnée au-dessus de la pièce intermédiaire 60 et du réservoir de collecte 9 et en-dessous de la tête de distribution de boisson 7.

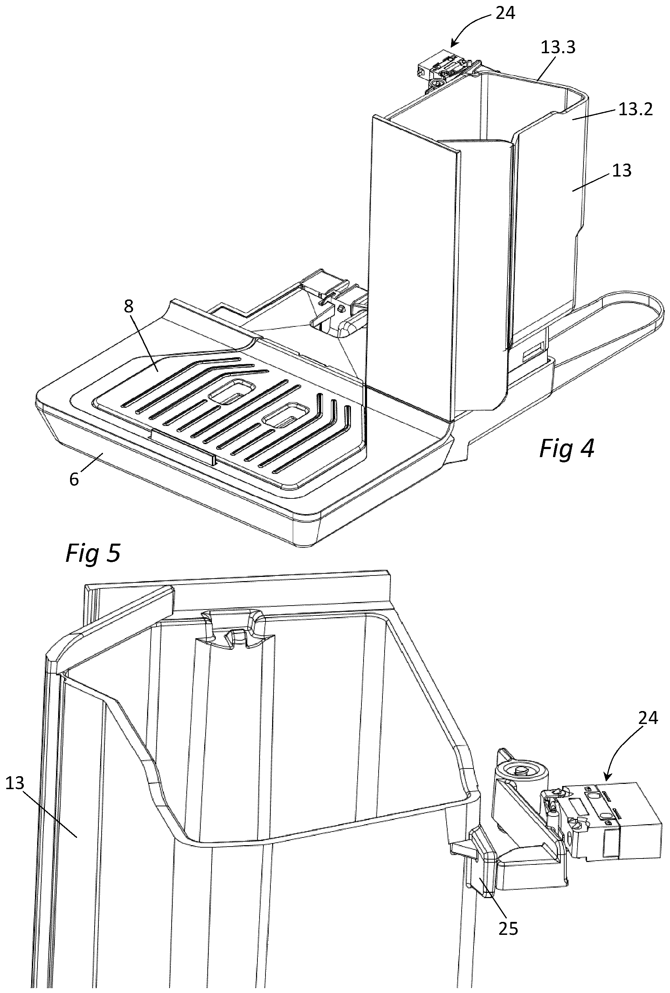

Comme montré sur les figures 4 et 5, l'appareil de préparation de boissons 2 comporte un dispositif de détection de présence 24, tel qu'un commutateur électrique, configuré pour détecter la présence du bac de collecte de mouture 13 dans le deuxième compartiment de réception 14. De façon avantageuse, le dispositif de détection de présence 24 est fixe par rapport au boîtier 3 (et est par exemple logé dans ce dernier) et est configuré pour occuper un premier état, et par exemple pour être activé ou désactivé, lorsque le bac de collecte de mouture 13 est disposé dans le deuxième compartiment de réception 14, et pour occuper un deuxième état, et par exemple pour être désactivé ou activé, lorsque le bac de collecte de mouture 13 est situé hors du deuxième compartiment de réception 14, c'est-à-dire est absent.

De façon avantageuse, l'unité électronique de commande 5 est configurée pour empêcher la réalisation d'un cycle de préparation de boisson lorsque la présence du bac de collecte de mouture 13 dans le deuxième compartiment de réception 14 n'est pas détectée par le dispositif de détection de présence 24, c'est-à-dire lorsque le bac de collecte de mouture 13 est absent.

Comme montré sur les figures 5 et 8, le bac de collecte de mouture 13 comporte une partie d'actionnement 25, telle qu'une patte d'actionnement, configurée pour coopérer avec le dispositif de détection de présence 24 lorsque le bac de collecte de mouture 13 est inséré dans ou retiré hors du deuxième compartiment de réception 14. La partie d'actionnement 25 peut par exemple être configurée pour entraîner un passage du dispositif de détection de présence 24 du deuxième état au premier état, par exemple pour activer ou désactiver le commutateur électrique, lorsque le bac de collecte de mouture 13 est inséré dans le deuxième compartiment de réception 14, et pour entraîner un passage du dispositif de détection de présence 24 du premier état au deuxième état, par exemple pour désactiver ou activer le commutateur électrique, lorsque le bac de collecte de mouture 13 est retiré hors du deuxième compartiment de réception 14.

Selon le mode de réalisation représenté sur les figures, la partie d'actionnement 25 est située dans la partie supérieure 13.2 du bac de collecte de mouture 13, et par exemple dans une partie supérieure arrière du bac de collecte de mouture 13, et fait saillie d'une face arrière du bac de collecte de mouture 13. De façon avantageuse, la partie d'actionnement 25 est configurée pour s'étendre sensiblement parallèlement au mouvement de retrait de bac.

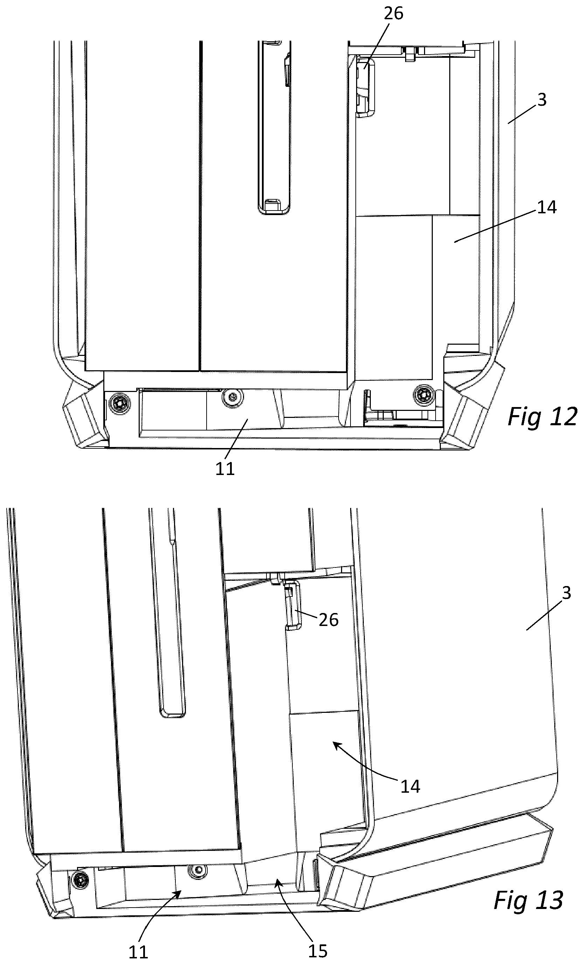

Comme montré sur les figures 11 et 12, le deuxième compartiment de réception 14 comporte une fenêtre de passage 26, par exemple de forme rectangulaire et par exemple s'étendant sensiblement verticalement, au travers de laquelle est apte à s'étendre la partie d'actionnement 25 lorsque le bac de collecte de mouture 13 est inséré dans ou retiré hors du deuxième compartiment de réception 14. La fenêtre de passage 26 permet ainsi à la partie d'actionnement 25 d'atteindre aisément le dispositif de détection de présence 24 lorsque ce dernier est logé dans un logement interne délimité par le boîtier 3.

Selon le mode de réalisation représenté sur les figures, la fenêtre de passage 26 est prévue sur une paroi arrière du deuxième compartiment de réception 14. De façon avantageuse, la paroi arrière du deuxième compartiment de réception 14 est configurée pour s'étendre sensiblement verticalement lorsque que le boîtier 3 repose sur une surface horizontale.

De façon avantageuse, la fenêtre de passage 26, le deuxième compartiment de réception 14 et la partie inférieure 13.1 du bac de collecte de mouture 13 sont configurés de telle sorte que, lorsque le bac de collecte de mouture 13 est inséré dans le deuxième compartiment de réception 14 en l'absence du support de récipient 6, la partie d'actionnement 25 est inapte à maintenir le dispositif de détection de présence 24 dans le premier état. En particulier, lorsque le bac de collecte de mouture 13 est inséré dans le deuxième compartiment de réception 14 en l'absence du support de récipient 6, le bac de collecte de mouture 13 occupe une position anormale de fonctionnement qui est abaissée verticalement par rapport à sa position normale de fonctionnement en présence du support de récipient 6. Or, lorsque le bac de collecte de mouture 13 occupe la position anormale de fonctionnement, la partie d'actionnement 25 est décalée verticalement par rapport au dispositif de détection de présence 24, et n'est donc pas apte à coopérer avec ce dernier.

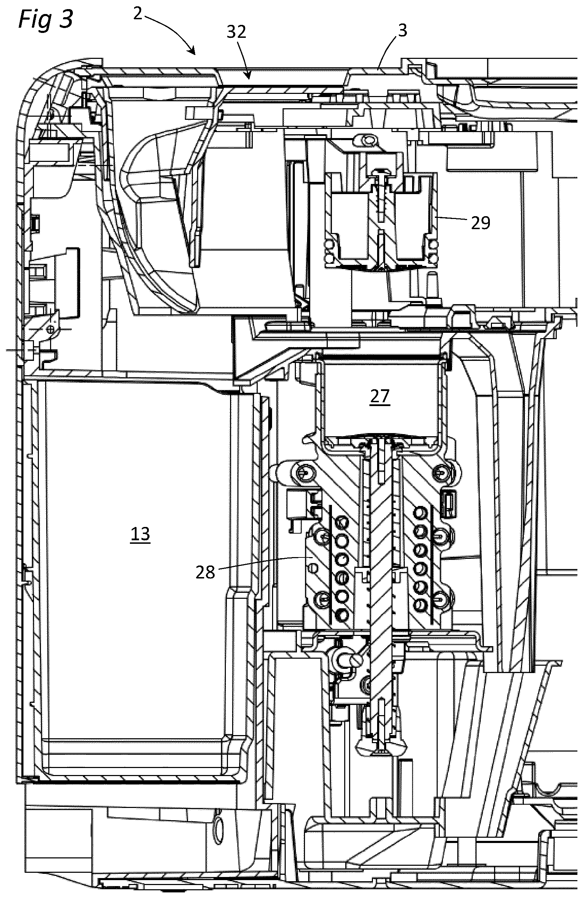

Comme montré sur la figure 3, l'appareil de préparation de boissons 2 comprend une chambre d'infusion 27 disposée dans le boîtier 3 et configurée pour contenir de la mouture, telle que de la mouture de café ou tout autre produit pulvérulent à infuser. La chambre d'infusion 27 a une forme de cuve cylindrique, et comprend un fond et une ouverture d'entrée au travers de laquelle la mouture est apte à être introduite dans la chambre d'infusion 27. De façon avantageuse, la chambre d'infusion 27 présente un axe longitudinal central configuré pour s'étendre sensiblement verticalement lorsque le boîtier 3 repose sur une surface horizontale.

L'appareil de préparation de boissons 2 comporte en outre un bloc de chauffe 28, tel qu'une chaudière, situé sous la chambre d'infusion 27 et configuré pour alimenter en eau chaude la chambre d'infusion 27. A cet effet, le bloc de chauffe 28 renferme un circuit d'eau et un élément chauffant électrique.

Comme montré sur la figure 3, l'appareil de préparation de boissons 2 comprend également un organe de compactage 29, tel qu'un piston de compactage, qui est configuré pour coopérer de manière étanche avec la chambre d'infusion 27 et qui est déplaçable verticalement par rapport à la chambre d'infusion 27 entre une position de repos dans laquelle l'organe de compactage 29 est situé à l'extérieur de la chambre d'infusion 27 et une position de travail dans laquelle l'organe de compactage 29 est situé à l'intérieur de la chambre d'infusion 27 et est configuré pour compacter de la mouture contenue dans la chambre d'infusion 27. L'appareil de préparation de boissons 2 comprend par ailleurs un mécanisme de déplacement, par exemple équipé d'un vérin hydraulique, relié mécaniquement à l'organe de compactage 29 et apte à déplacer verticalement l'organe de compactage 29 entre la position de repos et la position de travail.

De l'eau chaude est plus particulièrement envoyée à travers la mouture contenue dans la chambre d'infusion 27 lorsque l'organe de compactage 29 occupe la position de travail, et la boisson infusée est ensuite évacuée hors de la chambre d'infusion 27 et vers la tête de distribution de boisson 7 via un canal interne prévu sur l'organe de compactage 29 et un conduit de liaison reliant le canal interne à la tête de distribution de boisson 7.

L'appareil de préparation de boissons 2 comporte également un distributeur de mouture automatique 31 configuré pour alimenter automatiquement, et par exemple par gravité, la chambre d'infusion 27 avec une dose de mouture prédéterminée. La dose de mouture distribuée par le distributeur de mouture automatique 31 peut par exemple varier selon le cycle de fonctionnement sélectionné par un utilisateur à l'aide de l'interface utilisateur 4.

Le distributeur de mouture automatique 31 comporte plus particulièrement un réservoir de grains de café, par exemple situé dans une partie supérieure du boîtier 3, et un broyeur configuré pour broyer des grains de café provenant du réservoir de grains de café 16. De façon avantageuse, le distributeur de mouture automatique 31 comporte en outre une goulotte d'acheminement communiquant avec un orifice de distribution de mouture prévu sur le broyeur et configurée pour acheminer de la mouture provenant de l'orifice de distribution de mouture vers la chambre d'infusion 27.

L'appareil de préparation de boissons 2 comporte en outre avantageusement un distributeur de mouture manuel 32 configuré pour permettre à un utilisateur d'introduire manuellement de la mouture dans la chambre d'infusion 27, lorsqu'il souhaite se préparer un café sans utiliser le broyeur 17, c'est-à-dire à partir de café déjà moulu et non pas à partir de grains de café contenu dans le réservoir de grains de café 16.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Appareil de préparation de boissons (2) comprenant :
- un boîtier (3) comportant un premier compartiment de réception (11) et un deuxième compartiment de réception (14),
- une chambre d'infusion (27) disposée dans le boîtier (3) et configurée pour contenir de la mouture, telle que de la mouture de café ou tout autre produit pulvérulent à infuser,
- une tête de distribution de boisson (7) configurée pour être reliée fluidiquement à la chambre d'infusion (27) et par laquelle une boisson confectionnée par l'appareil de préparation de boissons (2) est apte à s'écouler hors de l'appareil de préparation de boissons (2),
- un support de récipient (6) qui est partiellement logé dans le premier compartiment de réception (11) et qui est amovible par rapport au boîtier (3), le support de récipient (6) comportant :
o une partie de support (8) configurée pour supporter un récipient et pour être située au moins en partie en-dessous de la tête de distribution de boisson (7), de telle sorte qu'une boisson confectionnée par l'appareil de préparation de boissons (2) est apte à s'écouler par gravité dans un récipient supporté par la partie de support (8),
o un réservoir de collecte (9) configuré pour être situé au moins en partie en-dessous de la partie de support (8) et pour collecter de l'eau de rinçage et/ou des gouttes de boisson s'écoulant par gravité depuis la tête de distribution de boisson (7), et
- un bac de collecte de mouture (13) qui est logé au moins en partie dans le deuxième compartiment de réception (14) et qui est amovible par rapport au boîtier (3), le bac de collecte de mouture (13) étant configuré pour collecter des galettes de mouture usagées provenant de la chambre d'infusion (27),
le support de récipient (6) et le bac de collecte de mouture (13) étant configurés de telle sorte qu'un retrait du support de récipient (6) hors du premier compartiment de réception (11) entraîne un retrait du bac de collecte de mouture (13) hors du deuxième compartiment de réception (14),
**caractérisé en ce que** le bac de collecte de mouture (13) est amovible, par rapport au boîtier (3), indépendamment du support de récipient (6), de telle sorte que le bac de collecte de mouture (13) est apte à être retiré hors du deuxième compartiment de réception (14) sans retirer le support de récipient (6) hors du premier compartiment de réception (11).

2. Appareil de préparation de boissons (2) selon la revendication 1, dans lequel le support de récipient (6) comporte un logement de réception (16) dans lequel est monté de manière amovible le bac de collecte de mouture (13).

3. Appareil de préparation de boissons (2) selon la revendication 2, dans lequel le logement de réception (16) est ouvert vers le haut.

4. Appareil de préparation de boissons (2) selon la revendication 2 ou 3, dans lequel le bac de collecte de mouture (13) est configuré pour être retiré hors du logement de réception (16) et du deuxième compartiment de réception (14) selon un mouvement de retrait de bac qui est dirigé vers l'avant de l'appareil de préparation de boissons (2).

5. Appareil de préparation de boissons (2) selon l'une quelconque des revendications 2 à 4, dans lequel le support de récipient (6) comprend une pièce intermédiaire (60) destinée à être superposée au réservoir de collecte (9) et définissant le logement de réception (16).

6. Appareil de préparation de boissons (2) selon la revendication précédente, dans lequel la pièce intermédiaire (60) est propre à être reçue sur un épaulement formé sur un bord périphérique du réservoir de collecte (9) et/ou sur des plots en saillie d'un fond du réservoir de collecte (9).

7. Appareil de préparation de boissons (2) selon la revendication 5 ou 6, dans lequel la partie de support (8) comprend une grille de support de récipient (8.1) comprenant des orifices de passage de liquide destinés à être positionnés en regard de la tête de distribution de boisson (7), et un capot de réception (8.2) configuré pour supporter la grille de support de récipient (8.1) et propre à être fixé à la pièce intermédiaire (60) et/ou au réservoir de collecte (9), le capot de réception (8.2) définissant un logement de réception central dans lequel est reçue la grille de support de récipient (8.1).

8. Appareil de préparation de boissons (2) selon l'une quelconque des revendications 2 à 7, dans lequel le support de récipient (6) comporte deux parois de guidage latérales (17) délimitant latéralement le logement de réception (16), le bac de collecte de mouture (13) comportant une partie inférieure (13.1) pourvue de deux parois latérales inférieures (18) situées à l'opposé l'une de l'autre et configurées pour coopérer avec les deux parois de guidage latérales (17) prévues sur le support de récipient (6) lorsque le bac de collecte de mouture (13) est inséré dans ou retiré hors du logement de réception (16).

9. Appareil de préparation de boissons (2) selon l'une quelconque des revendications 2 à 8, lequel comporte un dispositif de maintien en position configuré pour maintenir en position le bac de collecte de mouture (13) dans le logement de réception (16), le dispositif de maintien en position comportant au moins un organe de retenue (22) prévu sur le support de récipient (6) et configuré pour coopérer avec le bac de collecte de mouture (13).

10. Appareil de préparation de boissons (2) selon l'une quelconque des revendications 1 à 9, dans lequel le bac de collecte de mouture (13) est configuré pour reposer directement sur le support de récipient (6).

11. Appareil de préparation de boissons (2) selon l'une quelconque des revendications 1 à 10, dans lequel le boîtier (3) comporte un compartiment de réception principal (15) comportant une première partie de réception formant le premier compartiment de réception (11), et une deuxième partie de réception communiquant avec la première partie de réception et formant le deuxième compartiment de réception (14).

12. Appareil de préparation de boissons (2) selon l'une quelconque des revendications 1 à 11, lequel comporte un dispositif de détection de présence (24) configuré pour détecter la présence du bac de collecte de mouture (13) dans le deuxième compartiment de réception (14).

13. Appareil de préparation de boissons (2) selon la revendication 12, lequel comporte une unité électronique de commande (5) configurée pour commander le fonctionnement de l'appareil de préparation de boissons (2), l'unité électronique de commande (5) étant configurée pour empêcher la réalisation d'un cycle de préparation de boisson lorsque la présence du bac de collecte de mouture (13) dans le deuxième compartiment de réception (14) n'est pas détectée par le dispositif de détection de présence (24).

14. Appareil de préparation de boissons (2) selon la revendication 12 ou 13, dans lequel le bac de collecte de mouture (13) comporte une partie d'actionnement (25) configurée pour coopérer avec le dispositif de détection de présence (24) lorsque le bac de collecte de mouture (13) est inséré dans ou retiré hors du deuxième compartiment de réception (14).

15. Appareil de préparation de boissons (2) selon la revendication 14, dans lequel le deuxième compartiment de réception (14) comporte une fenêtre de passage (26) au travers de laquelle s'étend la partie d'actionnement (25) lorsque le bac de collecte de mouture (13) est situé dans le deuxième compartiment de réception (14).
